# EUROPÄISCHE PATENTANMELDUNG

(11) **EP 1 586 716 A2**
(43) Veröffentlichungstag der Anmeldung: **19.10.2005**
(21) Anmeldenummer: 05007369.1
(22) Anmeldetag: 05.04.2005
(51) Int. Cl.: E04B 1/80

(54) **Dämmplatte aus Schafwolle und Verfahren für ihre Herstellung**

(30) Priorität: 13.04.2004 IT BZ20040016
(71) Anmelder: Lang, Johann, 39050 Auna di Sotto-Renon BZ (IT)
(72) Erfinder: Lang, Johann, 39050 Auna di Sotto-Renon BZ (IT)
(74) Vertreter: Faraggiana, Vittorio

(57) **Zusammenfassung**

Beschrieben wird eine Dämmplatte aus Schafwolle.

Gemäß der Erfindung enthält die Dämmplatte gepresste Schafwolle (3), die mit Naturharz bestäubt und an ihren Stirnseiten mit Papier (2) versiegelt wurde, wobei gegenüber anstoßenden Dämmplatten die Fugen beim Verlegen derart versiegelt werden, dass das Eindringen von Insekten, beispielsweise in der Form von Motten verhindert wird.

## Beschreibung

Die vorliegende Erfindung bezieht sich auf eine Dämmplatte aus Schafwolle und ein Verfahren für ihre Herstellung gemäß dem Oberbegriff des Anspruchs 1 bzw. dem Oberbegriff des Anspruchs 4.

Eine derartige Dämmplatte ist beispielsweise aus der DE 43 16 695 bekannt. In dieser Anmeldung wird die Anwendung von Naturfasern zur Gestaltung von Gebäudefassaden und Oberflächen tragender Konstruktionen beschrieben.

In dieser Anmeldung wird als Rohstoff zur dauerhaften wärme- und schalldämmenden Verkleidung und Gestaltung von Oberflächen tragender Konstruktionen und Gebäudefassaden sowie zur Schadstoffbindung in besonders gefährdeten Regionen Tierwolle, insbesondere Schafwolle, in entsprechend verarbeiteter Form zur Anwendung gebracht. Vorbehandelte Vlieslagen aus Schafwolle werden zu Filz vernadelt. Der so erhaltene Flies aus reiner Schafwolle wird zu den gewünschten Elementformen gepackt und ist bereits in diesem Zustand zur dauerhaften wärme- und schalldämmenden Außenverkleidung und Gestaltung von Oberflächen tragender Konstruktionen und Gebäudefassaden sowie zur Schadstoffbindung einsetzbar.

Der auf die beschriebene Art und Weise hergestellte Filz, außer dass er vorrangig natürlich hergestellt wird, ist in der Lage, Schadstoffe in der Luft zu binden und/oder zu neutralisieren und besitzt daher irgendwie eine Filterwirkung für die verschmutzte Luft. Es wurde jedoch gefunden, dass die auf bekannte Weise hergestellten Dämmplatten aus Schafwolle das Problem aufweisen, dem Angriff von Insekten, insbesondere von Motten ausgesetzt zu sein, wobei dem Filz selbst die Fähigkeit verloren geht, selbsttragend zu sein, die Schadstoffe in der Luft zu binden und neutralisieren. Dämmplatten bekannter Art sind überdies teuer in ihrer Abpackung, da sie zahlreiche Vernadelungsarbeiten erfordern, um auf dauerhafte Weise die Schafswolle festzuhalten.

Die Aufgabe der Erfindung liegt darin, Probleme der Dämmplatten bekannter Art zu vermeiden und eine Dämmplatte aus Schafwolle vorzuschlagen, die in ihrer Konsistenz kompakt sein soll, ohne auf die Vernadelung zurückgreifen zu müssen, und gegen das Eindringen, beispielsweise von Motten, höchst unanfällig ist.

Diese und weitere Aufgaben werden durch eine Dämmplatte aus Schafwolle mit den Merkmalen des kennzeichnenden Teils des Anspruchs 1 und in einem Verfahren zur Herstellung einer derartigen Platte durch die Merkmale des kennzeichnenden Teils des Anspruchs 3 gelöst.

Gemäß der Erfindung enthalten die Dämmplatten verdichtete Schafwolle, die mit Naturharz bestäubt wurde, und an ihren Seiten mit Papier beim Verlegen verdeckt und gegenüber den anliegenden anstoßenden Dämmplatten an den Fugen beim Verlegen versiegelt wurden, indem immer beispielsweise Klebepapierstreifen derart verwendet werden, dass das Eindringen von Insekten, beispielsweise in der Form von Motten verhindert wird.

So werden die Mängel der Materialien aus Schafwolle herkömmlicher Art beseitigt. Die Schafwolle ist nämlich weich und neigt dazu zum "Zusammensitzen". Sie lässt sich schwer befestigen und die Schalldämmung ist gering. Der Mottenschutz mit Insektiziden ist noch dazu bedenklich.

Gemäß der Erfindung werden hingegen stabile Dämmplatten aus Schafwolle erhalten, die wegen ihrer Kompaktheit eine Befestigungsmöglichkeit besitzen, wobei ein Nachgeben unmöglich gemacht wird. Die Schalldämmung wird verbessert. Der Schutz gegen Ungeziefer erfolgt ohne Gifte, indem Naturharz verwendet wird.

Im Verfahren gemäß der Erfindung wird Schafwolle gereinigt, mechanisch gelockert, mit Naturharz bestäubt, in die gewünschte Form gepresst und in einem Ofen beispielsweise auf 60° C erhitzt. Nach der Abkühlung wird die gepresste Dämmplatte aus der Form genommen und auf den beiden Stirnseiten wird Papier angebracht. Beim Verlegen werden die anstoßenden Fugen versiegelt, wobei so verhindert wird, dass Ungeziefer eindringt.

So werden Schafwollplatten mit verschiedenen Abmessungen und Stärken ohne Zusatz von irgend einer chemischen oder synthetischen Substanz erhalten.

Weitere Merkmale und Einzelheiten der erfindungsgemäßen Dämmplatten gehen aus den Patentansprüchen und aus der folgenden Beschreibung einer bevorzugten, in der beigefügten Zeichnung dargestellten Ausführungsform hervor. Es zeigen,
- Figur 1: schaubildlich eine erfindungsgemäße Dämmplatte, und
- Figur 2: schaubildlich vier miteinander versiegelte Dämmplatten aus Schafwolle.

In den Figuren ist mit der Bezugsziffer 1 in ihrer Gesamtheit eine erfindungsgemäße Dämmplatte aus Schafwolle angegeben.

Jede Stirnseite der Dämmplatte 1 ist mit einem Papierblatt 2 auf einer Stirnseite und mit einem nicht ersichtlichen Papierblatt auf der anderen Stirnseite versehen. Zwischen den beiden Papierblättern 2 befindet sich Schafwolle 3, die zweckmäßiger Weise gepresst und mit Naturharz bestäubt ist.

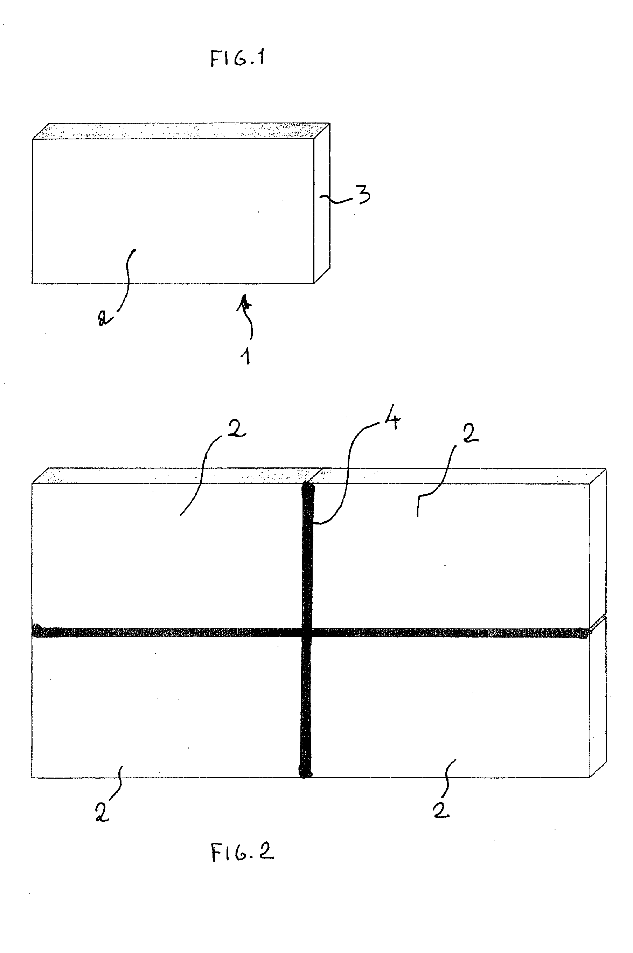

Wie in Figur 2 dargestellt, werden die zueinander anliegenden Dämmplatten miteinander längs ihrer Ränder mit Schichten von Klebepapierstreifen 4 versiegelt.

## Patentansprüche

1. Dämmplatte aus Schafwolle, **dadurch gekennzeichnet, dass** sie gepresste Schafwolle (3) enthält, die mit Naturharz bestäubt und an ihren Stirnseiten mit Papier (2) versiegelt wurde, wobei gegenüber anstoßenden Dämmplatten die Fugen beim Verlegen derart versiegelt werden, dass das Eindringen von Insekten, beispielsweise in der Form von Motten verhindert wird.

2. Dämmplatte aus Schafwolle, **dadurch gekennzeichnet, dass** die Versiegelung aus natürlichem Harz besteht.

3. Verfahren zur Herstellung von Dämmplatten nach den vorstehenden Ansprüchen, **dadurch gekennzeichnet, dass** die Schafwolle über eine Reinigungseinrichtung gereinigt wird, mechanisch über eine Lockerungseinrichtung gelockert, mit Naturharz bestäubt, in einer Form in der gewünschten Ausbildung gepresst und in einem Ofen, beispielsweise auf 70° erhitzt wird, wobei nach Abkühlung die gepresste Platte aus der Form genommen wird und an den beiden Stirnseiten Papier angebracht wird und beim Verlegen die Fugen zwischen den anliegenden Platten versiegelt werden, wobei das Eindringen von Ungeziefer verhindert wird.
